# EUROPEAN PATENT APPLICATION

(11) **EP 4 604 192 A1**
(43) Date of publication of application: **20.08.2025**
(21) Application number: 25157050.3
(22) Date of filing: 11.02.2025
(51) Int. Cl.: H01M 4/04, H01M 4/13, H01M 4/139, H01M 4/66, H01M 4/583, H01M 4/525, H01M 4/02

(54) **ELECTRODE SHEET AND MANUFACTURING METHOD FOR ELECTRODE SHEET**

(30) Priority: 16.02.2024 JP 2024022313
(71) Applicant: FUJIFILM Corporation, Tokyo 106-8620 (JP)
(72) Inventor: IKEYAMA, Yusuke, Minamiashigara (JP); SANO, Takayuki, Minamiashigara (JP); KUNIYASU, Satoshi, Minamiashigara (JP)
(74) Representative: Meissner Bolte Partnerschaft mbB

(57) **Abstract**

Provided are an electrode sheet having low residual stress and a manufacturing method for an electrode sheet.

An electrode sheet including a metal foil having a thickness of 15 µm or less, and coating films formed on both surfaces of the metal foil, in which a curvature radius of a curl of the electrode sheet is 2,000 mm or more, and a curvature radius of the curl after the coating film formed on one surface of the metal foil is removed from the electrode sheet is 350 mm or more, and applications thereof.

## Description

### BACKGROUND OF THE INVENTION

### 1. Field of the Invention

The present disclosure relates to an electrode sheet and a manufacturing method for an electrode sheet.

### 2. Description of the Related Art

A method of producing a desired coating film on a support in a continuous process of a roll-to-roll method is known.

Examples of the manufacturing method for a coating film include a method of applying a coating liquid for obtaining a desired coating film onto a support and drying the obtained coating liquid film. The electrode sheet is manufactured, for example, by applying a coating liquid containing an electrode material to both surfaces of a metal foil.

For example, WO2021-210542A discloses a method of manufacturing an electrode, including a pressing step of pressing a current collector foil, a first electrode composite material layer formed on one surface of the current collector foil, and a second electrode composite material layer formed on the other surface of the current collector foil to manufacture an electrode having the current collector foil, a first electrode active material layer in which the first electrode composite material layer is compressed, and a second electrode active material layer in which the second electrode composite material layer is compressed at a higher compression ratio than the first electrode active material layer, and a winding step of winding the electrode with the second electrode active material layer facing the roll core after the pressing step.

### SUMMARY OF THE INVENTION

In the electrode sheet, it may be required to reduce residual stress.

In a case where the residual stress is present in the electrode sheet, the residual stress is released with the passage of time, which may cause a dimensional change in the battery and lead to a decrease in the performance of the battery.

In addition, in a case where residual stress is present in the electrode sheet, stress corrosion occurs, a side reaction is likely to occur during charging and discharging of the battery, and the repeated charging and discharging characteristics of the battery may deteriorate.

Therefore, an object to be achieved by one embodiment of the present disclosure is to provide an electrode sheet having low residual stress and a manufacturing method for an electrode sheet in consideration of the above circumstances.

The present disclosure includes the following aspects.
<1>
   An electrode sheet comprising:
   a metal foil having a thickness of 15 µm or less; and
   coating films formed on both surfaces of the metal foil,
   in which a curvature radius of a curl of the electrode sheet is 2,000 mm or more, and
   a curvature radius of the curl after the coating film formed on one surface of the metal foil is removed from the electrode sheet is 350 mm or more.
<2>
   The electrode sheet according to <1>,
   in which a thickness of the coating film is 30 µm to 200 µm.
<3>
   The electrode sheet according to <1> or <2>,
   in which the metal foil is an aluminum foil.
<4>
   The electrode sheet according to any one of <1> to <3>,
   in which the thickness of the metal foil is 12 µm or less.
<5>
   The electrode sheet according to any one of <1> to <4>,
   in which the coating film contains a carbon nanotube.
<6>
   The electrode sheet according to any one of <1> to <5>,
   in which the electrode sheet is used for a negative electrode of a secondary battery.
<7>
   A manufacturing method for an electrode sheet, comprising:
   a step of forming coating films on both surfaces of a metal foil having a thickness of 15 µm or less to manufacture the electrode sheet,
   in which a curvature radius of a curl of the electrode sheet is 2,000 mm or more, and
   a curvature radius of the curl after the coating film formed on one surface of the metal foil is removed from the electrode sheet is 350 mm or more.

According to one embodiment of the present disclosure, there are provided an electrode sheet having low residual stress and a manufacturing method for an electrode sheet.

### BRIEF DESCRIPTION OF THE DRAWINGS

Fig. 1 is a schematic view showing an example of a method of forming a coating film on a metal foil.
Fig. 2 is a schematic side view for describing an example of a curling regulation unit.
Fig. 3 is a schematic side view for describing another example of the curling regulation unit.

### DESCRIPTION OF THE PREFERRED EMBODIMENTS

Hereinafter, embodiments of the coating film forming method will be described. However, the present disclosure is not limited to the following embodiments, and can be implemented with appropriate modification within the scope of the object of the present disclosure.

A numerical range described using "to" in the present disclosure means a range that includes numerical values written before and after "to" as a minimum value and a maximum value, respectively.

In the numerical range described stepwise in the present disclosure, an upper limit value or a lower limit value described in a certain numerical range may be replaced with an upper limit value or a lower limit value of another numerical range described stepwise. In addition, regarding the numerical range described in the present disclosure, an upper limit value or a lower limit value described in a numerical range may be replaced with a value described in Examples.

Each element in each drawing shown in the present disclosure is not necessarily an accurate scale, the main purpose is to clearly show the principle of the present disclosure, and some parts may be emphasized.

In addition, in each drawing, constitutional components having the same function are designated by the same reference numeral, and redundant description will be omitted.

In the present disclosure, the "width direction" refers to a direction orthogonal to a longitudinal direction of a long metal foil, a coating liquid film, and a coating film.

In the present disclosure, a combination of two or more preferred forms or aspects is a more preferred form or aspect.

### Electrode sheet

An electrode sheet according to the present disclosure is an electrode sheet including a metal foil having a thickness of 15 µm or less, and a coating film formed on both surfaces of the metal foil, in which a curvature radius of a curl of the electrode sheet is 2,000 mm or more, and the curvature radius of the curl after the coating film formed on one surface of the metal foil is removed from the electrode sheet is 350 mm or more.

The fact that the curvature radius of the curl of the electrode sheet is 2,000 mm or more means that the flatness is high.

The curvature radius of the curl is 350 mm or more after the coating film formed on one surface of the metal foil is removed, and thus the electrode sheet according to the present disclosure has a small residual stress.

### Metal Foil

The electrode sheet according to the present disclosure includes a metal foil.

The thickness of the metal foil is 15 µm or less, and preferably 12 µm or less. The lower limit value of the thickness of the metal foil is not particularly limited, and is, for example, 8 µm. The thickness of 15 µm or less of the metal foil indicates a range of the thickness of the metal foil in which a curl is likely to occur in practical use.

The thickness of the metal foil is measured by the following method.

A part of the metal foil is cut out and measured using a micrometer (product name "High-Precision Digimatic Micrometer MDH-25MC", manufactured by Mitutoyo Corporation).

The width and the length of the metal foil may be appropriately set from the viewpoint of applying the metal foil to a roll-to-roll method and the width and the length of the target electrode sheet.

Examples of the metal constituting the metal foil include copper, aluminum, silver, gold, and alloys thereof.

In addition, the metal constituting the metal foil may be stainless steel, nickel, titanium, or an invar alloy.

Among these, from the viewpoint of shape stability as a metal foil, a record of use, and the like, the metal foil is preferably a copper foil or an aluminum foil, and more preferably an aluminum foil.

### Coating film

The electrode sheet according to the present disclosure includes a coating film formed on both surfaces of the metal foil.

In order to increase the output of the battery, it is desirable to increase the specific surface area, and thus it is desirable that the thickness of the coating film is thin. On the other hand, in order to increase the capacity of the battery, it is desirable to increase the amount of the coating film per volume, and thus it is desirable that the thickness of the coating film is thick. **In** order to achieve both the output and the capacity of the battery, the thickness of the coating film is preferably 30 µm to 200 µm, and more preferably 40 µm to 100 µm.

The thickness of the metal foil being 30 µm to 200 µm indicates a range of the thickness of the metal foil in which a curl is likely to occur in practical use.

The thickness of the coating film is measured by the following method.

A part of the electrode sheet is cut out, and the thickness of the entire electrode sheet is measured using a micrometer (product name "High-Precision Digimatic Micrometer MDH-25MC", manufactured by Mitutoyo Corporation).

Then, a value obtained by subtracting the thickness of the metal foil from the thickness of the electrode sheet is defined as the thickness of the coating film. The method of measuring the thickness of the metal foil is as described above.

The coating film is formed, for example, by applying a coating liquid described later onto a metal foil and drying the coating liquid.

The coating film may contain components necessary for functioning as an electrode sheet, and the components constituting the coating film are not particularly limited.

The coating film includes, for example, an electrode active material and a conductive auxiliary agent.

### Electrode active material

The electrode active material is a substance capable of intercalating and deintercalating ions of a metal element belonging to Group 1 or Group 2 in the periodic table.

Examples of the electrode active material include a positive electrode active material and a negative electrode active material.

### Positive electrode active material

The positive electrode active material is not limited, and a known electrode active material used for a positive electrode can be used. The positive electrode active material is preferably a positive electrode active material capable of reversibly intercalating and deintercalating lithium ions.

Specific examples of the positive electrode active material include transition metal oxides and elements (for example, sulfur) that can be compounded with lithium. Among these, the positive electrode active material is preferably a transition metal oxide.

The transition metal oxide is preferably a transition metal oxide containing at least one transition metal element (hereinafter, referred to as an "element Ma") selected from the group consisting of cobalt (Co), nickel (Ni), iron (Fe), manganese (Mn), copper (Cu), or vanadium (V).

In a case where the transition metal oxide contains Li and an element Ma, a molar ratio (Li/Ma) of Li to Ma is preferably 0.3 to 2.2.

In addition, the transition metal oxide may include at least one transition metal element (hereinafter, referred to as an "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), or boron (B). The content of the element Mb is preferably 0 mol% to 30 mol% with respect to the substance amount of the element Ma.

Examples of the transition metal oxides include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxides having a bedded salt-type structure include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Examples of the transition metal oxides having a spinel-type structure include LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound include an olivine-type iron phosphate salt (for example, LiFePO₄ and Li₃Fe₂(PO₄)₃), a pyrroline phosphate salt (for example, LiFeP₂O₇), a cobalt phosphate salt (for example, LiCoPO₄), and a monoclinic nasicon-type vanadium phosphate salt (for example, Li₃V₂(PO₄)₃ (lithium vanadium phosphate)).

Examples of the lithium-containing transition metal halogenated phosphoric acid compound include an iron phosphate salt fluoride (for example, Li₂FePO₄F), a manganese phosphate salt fluoride (for example, Li₂MnPO₄F), and a cobalt phosphate salt fluoride (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a bedded salt-type structure, and more preferably at least one compound selected from the group consisting of LiCoO₂ (lithium cobalt oxide [LCO]), LiNi_{0.85}Co_{0.10}Al_{0.05}O₂ (lithium nickel cobalt aluminum oxide [NCA]), or LiNi_{1/3}Co_{1/3}Mn_{1/3}O₂ (lithium nickel manganese cobalt oxide [NMC]).

The positive electrode active material may be a commercially available product or may be a synthetic product produced by a known method (for example, a baking method). For example, the positive electrode active material obtained by the baking method may be washed with water, an acidic aqueous solution, an alkaline aqueous solution, or an organic solvent.

In addition, the positive electrode active material may have a carbon coating film on a surface thereof.

The positive electrode active material may be used alone or in combination of two or more kinds thereof.

In addition, even in a case where one kind of positive electrode active material is used, positive electrode active materials having different particle diameters may be used in combination.

### Negative electrode active material

The negative electrode active material is not limited, and a known electrode active material used for a negative electrode can be used. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single body, a lithium alloy (for example, a lithium aluminum alloy), and a metal capable of forming an alloy with lithium (for example, Sn, Si, and In). Among these, from the viewpoint of reliability, the negative electrode active material is preferably a carbonaceous material or a lithium composite oxide.

The carbonaceous material is a material substantially consisting of carbon.

Examples of the carbonaceous material include a carbonaceous material obtained by baking petroleum pitch, carbon black (for example, acetylene black), graphite (for example, natural graphite and artificial graphite (for example, vapor-grown graphite)), hard carbon, and a synthetic resin (for example, polyacrylonitrile (PAN) and a furfuryl alcohol resin). Examples of the carbonaceous material also include carbon fibers (for example, polyacrylonitrile-based carbon fibers, cellulose-based carbon fibers, pitch-based carbon fibers, vapor-grown carbon fibers, dehydrated polyvinyl alcohol (PVA)-based carbon fibers, lignin carbon fibers, vitreous carbon fibers, and activated carbon fibers). Examples of the graphite include mesophase microspheres, graphite whiskers, and flat plate-shaped graphite.

In the present disclosure, the term "flat plate-shaped" means a shape having two main planes facing opposite directions.

The metal composite oxide is preferably a metal composite oxide capable of intercalating and deintercalating lithium.

From the viewpoint of high current density charging and discharging characteristics, the metal composite oxide capable of intercalating and deintercalating lithium preferably contains at least one element selected from the group consisting of titanium or lithium.

It is preferable that the metal oxide and the metal composite oxide are particularly amorphous oxides.

The metal oxide and the metal composite oxide are also preferably chalcogenides. The chalcogenide is a reaction product of a metal element and an element of Group 16 in the periodic table.

Among the compound groups consisting of an amorphous oxide and a chalcogenide, an amorphous oxide and a chalcogenide of a metalloid element are preferable, and an oxide containing at least one element selected from the group consisting of elements of Groups 13 to 15 in the periodic table, Al, Ga, Si, Sn, Ge, Pb, Sb, or Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions and the suppression of the deterioration of the electrode makes it possible to improve the life of the lithium ion secondary battery, it is preferable that the negative electrode active material containing titanium is Li₄Ti₅O₁₂ (lithium titanium oxide [LTO]).

The negative electrode active material may be a commercially available product or may be a synthetic product manufactured by a known method (for example, a baking method). For example, the negative electrode active material obtained by the baking method may be washed with water, an acidic aqueous solution, an alkaline aqueous solution, or an organic solvent.

The negative electrode active material is available, for example, as CGB20 (manufactured by Nippon Graphite Industries Co., Ltd.).

The composition of the negative electrode active material is measured by inductively coupled plasma (ICP) emission spectroscopy.

The negative electrode active material may be used alone or in combination of two or more kinds thereof.

In addition, even in a case where one kind of negative electrode active material is used, negative electrode active materials having different particle diameters may be used in combination.

The surfaces of the positive electrode active material and the negative electrode active material may be coated with a surface coating agent, respectively. Examples of the surface coating agent include a metal oxide containing Ti, Nb, Ta, W, Zr, Si, or Li. Examples of the metal oxide include a titanium oxide spinel, a tantalum-based oxide, a niobium-based oxide, and a lithium niobate-based compound.

### Conductive auxiliary agent

The conductive auxiliary agent is not particularly limited, and a known conductive auxiliary agent can be used.

Examples of the conductive auxiliary agent include graphite (for example, natural graphite and artificial graphite), carbon black (for example, acetylene black, ketjen black, and furnace black), amorphous carbon (for example, needle cokes), carbon fibers (for example, vapor-grown carbon fibers and carbon nanotubes), other carbonaceous materials (for example, graphene and fullerene), metal powders (for example, copper powder and nickel powder), metal fibers (for example, copper fibers and nickel fibers), and conductive polymers (for example, polyaniline, polypyrrole, polythiophene, polyacetylene, and a polyphenylene derivative).

The conductive auxiliary agent may be used alone or in combination of two or more kinds thereof.

### Curvature radius of curl

The electrode sheet according to the present disclosure has a curvature radius of 2,000 mm or more, and preferably 5,000 mm or more. The upper limit value of the curvature radius is not particularly limited, and is, for example, 50,000 mm.

Since the electrode sheet according to the present disclosure has a curvature radius of 2,000 mm or more, it can be said that a coating film is symmetrically formed on both surfaces of the metal foil.

In the present disclosure, the curvature radius is measured by the following method.

First, the electrode sheet is cut out so that a ratio of a length to a width is 10:1, thereby obtaining a sample. For example, a sample having a length of 100 mm and a width of 10 mm is obtained.

The sample is vertically installed and the upper end is fixed in an environment of 25°C and a relative humidity of 50%.

The curl amount of the lower end of the sample is measured, and the curvature radius is calculated from the relationship with the width of the sample.

In the electrode sheet according to the present disclosure, the curvature radius of the curl after the coating film formed on one surface of the metal foil is removed from the electrode sheet is 350 mm or more, and preferably 500 mm or more. The upper limit value of the curvature radius is not particularly limited, and is, for example, 50,000 mm.

In the present disclosure, the curvature radius of the curl after the coating film formed on one surface of the metal foil is removed is measured by the following method.

the electrode sheet is allowed to stand in an environment of 25°C and a relative humidity of 50% for 10 minutes or longer.

The electrode sheet is cut out to obtain a sample having a length of 180 mm and a width of 100 mm.

In the obtained sample, a coating film formed on one surface of the metal foil is applied with a solvent at 25°C to be wet. The amount of the solvent is set to 20 g per area of 150 mm × 20 mm of the coating film. The type of the solvent is not particularly limited, and examples thereof include water. After applying the solvent to the coating film, the coating film is allowed to stand for 1 minute or longer. A sample is placed on a base, and a wet coating film is rubbed with a nonwoven fabric so as not to damage the surface of the metal foil, thereby removing the coating film from the metal foil. In a case of rubbing the coating film, the sample is not fixed to the base, or the four corners of the sample are fixed to the base with tape with a strength such that the curvature radius of the curl does not change. The base need only be a base having no unevenness.

An operation of wetting the coating film with a solvent and an operation of rubbing the wet coating film with a nonwoven fabric are repeated until the coating film formed on one surface of the metal foil is completely removed.

The fact that the metal foil is not damaged by the operation of rubbing with the nonwoven fabric can be determined based on the fact that the surface of the metal foil is visually observed and the gloss is maintained. In addition, the fact that the defect does not occur in the metal foil by the operation of rubbing with the nonwoven fabric can be determined based on the fact that the transmitted light is not present by applying light to the sample from the side of the coating film that is not rubbed.

After completely removing the coating film formed on one surface of the metal foil, the surface of the metal foil is wiped off. Then, the sample is dried by blowing air in an environment of 25°C and a relative humidity of 50%.

After the completion of the drying, the curvature radius of the curl after removing the coating film formed on one surface of the metal foil is measured by the same method as the above-described method of measuring the curvature radius.

The method of measuring the curvature radius is the same as the method of measuring the curvature radius of the electrode sheet.

In the electrode sheet according to the present disclosure, the residual stress is low because the curvature radius of the curl is 350 mm or more after the coating film formed on one surface of the metal foil is removed from the electrode sheet. Therefore, even in a case where the residual stress is released with the passage of time, the dimensional change in the battery is small, and the occurrence of breakage and wrinkles is suppressed. As a result, the performance of the battery is less likely to deteriorate.

In addition, stress corrosion is less likely to occur, and a decrease in the repeated charging and discharging characteristics of the battery can be suppressed.

Therefore, the electrode sheet according to the present disclosure is preferably used for a negative electrode of a secondary battery.

Examples of the secondary battery include a lithium ion battery, a lead battery, a nickel cadmium battery, and a nickel hydrogen battery.

The manufacturing method for an electrode sheet according to the present disclosure includes a step of forming a coating film on both surfaces of a metal foil having a thickness of 15 µm or less to manufacture an electrode sheet, in which a curvature radius of a curl of the electrode sheet is 2,000 mm or more, and a curvature radius of the curl after the coating film formed on one surface of the metal foil is removed from the electrode sheet is 350 mm or more.

The details of the curvature radius of the curl of the metal foil and the coating film, and the electrode sheet, and the curvature radius of the curl after removing the coating film formed on one surface of the metal foil from the electrode sheet are as described above.

Hereinafter, a method of forming a coating film on both surfaces of a metal foil having a thickness of 15 µm or less will be described.

The step of forming a coating film on both surfaces of the metal foil to manufacture an electrode sheet includes, for example, a step of applying a coating liquid onto the metal foil to obtain a coating liquid film, and a step of drying the coating liquid film. First, it is preferable that a coating film is formed on one surface of the metal foil, and then a coating film is formed on the other surface of the metal foil. From the viewpoint of forming a symmetrical coating film on both surfaces of the metal foil, it is preferable that the method of forming a coating film on one surface of the metal foil and the method of forming a coating film on the other surface of the metal foil are the same.

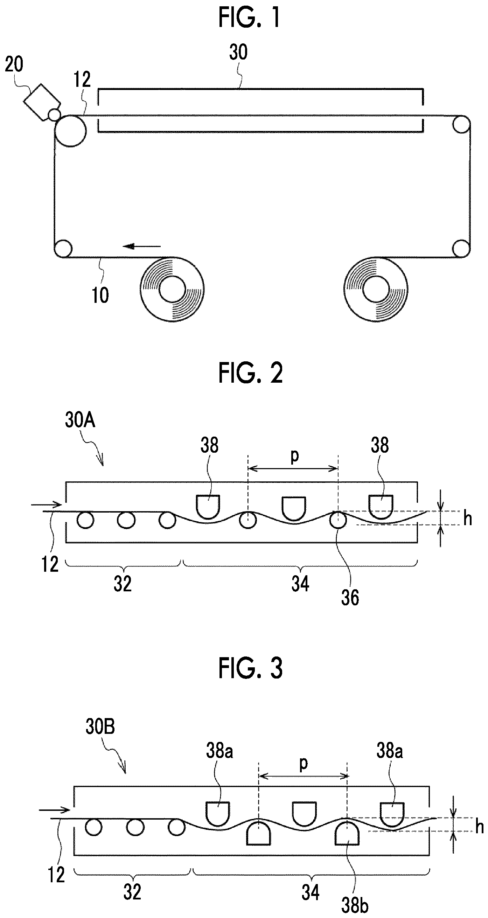

An example of a method of forming a coating film on a metal foil will be described with reference to Fig. 1.

As shown in Fig. 1, in a case where a distal end of the rolled long metal foil 10 is fed and continuous transport is started, the coating liquid is applied by the coating unit 20. As a result, a coating liquid film is formed on the long metal foil by the coating liquid.

Subsequently, the laminate 12 of the formed coating liquid film and the metal foil 10 is continuously transported in the drying unit 30 to dry the coating liquid film on the metal foil 10. As a result, the coating liquid film on the long metal foil is dried, and a coating film is formed.

The coating liquid is not particularly limited as long as it is a liquid material containing a solvent (or a dispersion medium) and a solid content.

The solid content contained in the coating liquid includes a component for obtaining the desired coating film, a component for improving coating suitability, and the like.

The solid content refers to components excluding a solvent (or a dispersion medium).

The solvent may be water, an organic solvent, or a mixed solvent of water and an organic solvent.

That is, the coating liquid may be a water-based coating liquid or a solvent-based coating liquid.

Here, the water-based coating liquid refers to a coating liquid in which a solvent (or a dispersion medium) contained in the coating liquid is substantially water. Here, "a solvent (or a dispersion medium) is substantially water" means that inclusion of a solvent other than the water, which is introduced using the solid content, is allowed, and means that a proportion of the water in all solvents (or all dispersion mediums) is 90% by mass or more. It is preferable that the proportion of the water in all solvents (or all dispersion mediums) is 95% by mass or more, and it is particularly preferable that all solvents (or all dispersion mediums) are water.

Examples of the water contained in the water-based coating liquid include natural water, purified water, distilled water, ion-exchanged water, pure water, and ultrapure water (for example, Milli-Q water). The Milli-Q water is ultrapure water obtained using a Milli-Q water production apparatus manufactured by Merck Millipore Co., Ltd.

A content of the water in the water-based coating liquid is not particularly limited, and is, for example, preferably 40% by mass or more, and more preferably 50% by mass or more with respect to the total mass of the water-based coating liquid.

The upper limit value of the content of water may be less than 100% by mass, but is, for example, 80% by mass with respect to the total mass of the water-based coating liquid, from the viewpoint of coating suitability.

The solid content contained in the coating liquid is not particularly limited, and examples thereof include various components used to obtain the desired coating film.

Specific examples of the solid content contained in the coating liquid include the components contained in the coating film.

The concentration of solid contents of the coating liquid is not particularly limited, but is preferably less than 70% by mass and more preferably 30% by mass to 60% by mass.

A known coating unit is applied to the coating of the coating liquid.

Specific examples of the coating unit (for example, the coating unit 20 in Fig. 1) include coating devices using a curtain coating method, a dip coating method, a spin coating method, a printing coating method, a spray coating method, a slot coating method, a roll coating method, a slide coating method, a blade coating method, a gravure coating method, a wire bar method, and the like.

It is preferable that the metal foil is continuously transported, and the coating liquid is applied onto the continuously transported metal foil.

Then, it is preferable that the coating liquid film is dried on the continuously transported metal foil.

In the step of drying the coating liquid film, it is preferable that curling regulation is started on the laminate consisting of the metal foil and the coating liquid film while the concentration of solid contents of the coating liquid film is 90% by mass or less, and the temperature of the laminate is maintained at 40°C to 100°C during the curling regulation.

Here, the concentration of solid contents of the coating liquid film can be determined by measuring a noncontact thickness from a point in time when the coating liquid is applied onto a metal foil until the coating liquid becomes a dry film, using an infrared spectroscopic interference film thickness meter SI-T80 manufactured by KEYENCE CORPORATION.

Specifically, first, a noncontact thickness from a point in time when the coating liquid is applied onto the metal foil until the coating liquid becomes a dry film is measured.

Next, a thickness of the film after the drying (dry film) is measured with a contact thickness meter. The measured thickness of the dry film is subtracted from the noncontact thickness measured first, and the thickness of the solvent (or dispersion medium) in the coating liquid film at each measurement point is calculated.

The thickness of the obtained dry film and the thickness of the solvent (or dispersion medium) are multiplied by the density of each (the density of the dry film and the density of the solvent) to convert to the dry film weight and the solvent weight per unit area of the coating liquid film at the measurement point, and the value of the solid content concentration is obtained.

In a case where the concentration of solid contents of the coating liquid film is 90% by mass or less, the components contained in the coating liquid film are fluid in the coating liquid film, and the residual stress is low. By starting the curling regulation in a state where the residual stress is low and maintaining the temperature of the laminate at 40°C to 100°C during the curling regulation, the occurrence of breakage and wrinkles can be suppressed.

From the viewpoint of further suppressing the occurrence of breakage and wrinkles, the concentration of solid contents of the coating liquid film in a case of starting the curling regulation is preferably 70% by mass or less. In addition, from the viewpoint of improving the drying efficiency, the concentration of solid contents of the coating liquid film in a case of starting the curling regulation is preferably 50% by mass or more.

The curling regulation is not particularly limited as long as it is a unit that can regulate the end part of the laminate of the coating liquid film and the metal foil in the width direction to curl (that is, to be bent) toward the coating liquid film side.

The curling regulation may be a unit that comes into contact with the coating liquid film or a unit that does not come into contact with the coating liquid film.

From the viewpoint of further suppressing the occurrence of breakage and wrinkles, the curling regulation is preferably a noncontact curling regulation.

The noncontact curling regulation is not particularly limited as long as it is a unit that can regulate the end part of the laminate of the coating liquid film and the metal foil in the width direction to curl (that is, to be bent) toward the coating liquid film side without coming into contact with the coating liquid film.

From the viewpoint of excellent curling regulation ability, the noncontact curling regulation is preferably performed by a unit (hereinafter, also referred to as a curling regulation unit) that ejects a gas to one or both surfaces of the laminate and continuously transports the laminate while bending the laminate in the thickness direction by wind pressure of the gas.

The curling regulation unit also functions as a drying unit since the curling regulation unit promotes drying (that is, an increase in the concentration of solid contents) by ejecting a gas onto the laminate.

### Curling regulation unit

The curling regulation unit will be described with reference to Figs. 2 and 3. Figs. 2 and 3 are schematic side views for describing the curling regulation unit.

In Figs. 2 and 3, reference numeral 32 indicates a pre-curling regulation region, and reference numeral 34 indicates a curling regulation region.

In the curling regulation region 34 of the drying unit 30A shown in Fig. 2, a curling regulation unit is used in which a gas is ejected to one surface of the laminate 12 (that is, a surface on which the coating liquid film is formed), and the laminate is continuously transported while being bent in the thickness direction by the wind pressure of the gas.

In the curling regulation region 34 of the drying unit 30B shown in Fig. 3, a curling regulation unit is used in which a gas is ejected to both surfaces of the laminate 12 (that is, the surface on which the coating liquid film is formed and the exposed surface of the metal foil) and the laminate is continuously transported while being bent in the thickness direction by the wind pressure of the gas.

According to such curling regulation unit, the laminate 12 can be transported while being undulated in a wavy shape as shown in the schematic side views of Figs. 2 and 3. By transporting the laminate 12 while undulating the laminate 12 in this way, the curling regulation is effectively exhibited, and the effect of suppressing the curl can be enhanced.

The drying rate of the coating liquid film can also be controlled by adjusting the type of the gas ejected from the curling regulation unit, the wind pressure, the temperature, the humidity, and the like.

From the viewpoint of further suppressing the occurrence of breakage and wrinkles, the noncontact curling regulation is preferably curling regulation unit shown in Fig. 3.

That is, it is preferable that the noncontact curling regulation is performed by a unit that continuously transports the laminate while ejecting a gas to both surfaces of the laminate and bending the laminate in the thickness direction by wind pressure of the gas.

The drying unit 30A shown in Fig. 2 will be described.

As shown in Fig. 2, the laminate 12 of the coating liquid film and the metal foil is transported through the drying unit 30A to dry the coating liquid film.

In Fig. 2, the curling regulation is started while the solid content concentration of the coating liquid film in the laminate 12 is increased in the pre-curling regulation region 32 and the solid content concentration of the coating liquid film on the metal foil 10 is 90% by mass or less in the curling regulation region 34.

In the pre-curling regulation region 32 in Fig. 2, the concentration of solid contents of the coating liquid film in the laminate 12 is increased by using a drying unit (for example, a hot air blower) as described later.

In the curling regulation region 34 in Fig. 2, a plurality of transport rolls 36 are provided on the metal foil side on the same plane, and a plurality of ejection units 38 that eject a gas are provided on the coating liquid film side on the same plane between installation positions of the transport rolls 36.

A gas (for example, air) is ejected from the ejection unit 38 toward the laminate 12, and the transport roll 36 rotates, so that the laminate 12 is transported while being bent in the thickness direction thereof by the wind pressure of the gas.

The drying unit 30B shown in Fig. 3 will be described.

As shown in Fig. 3, the laminate 12 of the coating liquid film and the metal foil is transported through the drying unit 30B to dry the coating liquid film.

In Fig. 3, the curling regulation is started in the pre-curling regulation region 32 in which the solid content concentration of the coating liquid film in the laminate 12 is increased and the curling regulation region 34 in which the solid content concentration of the coating liquid film on the metal foil 10 is 90% by mass or less.

In the pre-curling regulation region 32 in Fig. 3, the concentration of solid contents of the coating liquid film in the laminate 12 is increased by using a drying unit (for example, a hot air blower) as described later.

In the curling regulation region 34 in Fig. 3, a plurality of ejection units 38a that eject a gas to the metal foil side are provided on the same plane, and a plurality of ejection units 38b that eject a gas are provided on the coating liquid film side on the same plane between installation positions of the ejection units 38a.

A gas (for example, air) is ejected from the ejection unit 38a toward the laminate 12, and a gas (for example, air) is ejected from the ejection unit 38b toward the laminate 12, so that the laminate 12 is transported while being bent in the thickness direction thereof by the wind pressure of the gas.

The curling regulation region 34 in Figs. 2 and 3 may be installed at a position where the curling regulation is started while the concentration of solid contents of the coating liquid film of the transported laminate 12 is 90% by mass or less.

The installation position of the curling regulation region 34 can be set in advance by investigating the transition of the concentration of solid contents of the coating liquid film and setting the installation position based on the investigation result.

In addition, the drying state of the coating liquid film may be controlled such that the concentration of solid contents of the coating liquid film is in a range of 90% by mass or less in a case where the coating liquid film reaches the curling regulation region 34, by determining the installation position of the curling regulation region 34 and appropriately adjusting the transportation speed of the laminate 12, the drying conditions of the pre-curling regulation region 32, and the like.

Further, it is preferable that the end point of the curling regulation region 34 is, for example, to the outlet of the drying unit 30A or 30B.

In the curling regulation region 34 in Figs. 2 and 3, examples of the gas ejected toward the laminate 12 include air and the like.

In addition, the temperature of the ejected gas is, for example, preferably 60°C to 140°C and more preferably 90°C to 130°C.

Further, the wind speed of the ejected gas is, for example, preferably 1.5 m/sec to 50 m/sec.

Further, the amount of deformation of the laminate 12 in the curling regulation region 34 may be adjusted.

As shown in Figs. 2 and 3, the deformation amount of the laminate 12 includes a distance p between peaks and adjacent peaks in the laminate 12 that undulates in a wavy shape in a case where the laminate 12 is viewed in a side view, and a height difference h between the peaks and the valleys in the laminate 12. The distance p is equivalent to the distance between the adjacent transport rolls 36 or the distance between the ejection units 38b.

The distance p is, for example, preferably 100 mm to 1,500 mm and more preferably 200 mm to 1,000 mm.

In addition, the height difference h is preferably 10 mm to 500 mm and more preferably 20 mm to 200 mm.

Further, the distance p/the height difference h is preferably 10 or less and more preferably 5 or less since the curling regulation force increases as the value is smaller. In a case where the value of the distance p/the height difference h is reduced, the number of members in the curling regulation region 34 is increased or the size thereof is increased. Therefore, it is preferable to optimally design the lower limit value of the distance p/the height difference h in consideration of the equipment installation space, the intake capacity, the cost, and the like. The lower limit value of the distance p/the height difference h is, for example, 2.

### Drying

A known drying unit is applied to the drying of the laminate.

Examples of the drying unit (for example, a part of the drying unit 30 in Fig. 1, and drying in a pre-curling regulation region in Figs. 2 and 3) include an oven, a hot air blower, and an infrared ray (IR) heater.

From the viewpoint of further suppressing the occurrence of breakage and wrinkles, in this step, it is preferable to heat both surfaces of the laminate. Both surfaces of the laminate mean both a surface on a side to which the coating liquid is applied and a surface on a metal foil side.

In the related art, in order to dry a coating liquid applied onto a metal foil, only a surface on a side where the coating liquid is applied is heated. In this step, since the temperature of the laminate is maintained at 40°C to 100°C during the curling regulation, it is preferable to heat both surfaces of the laminate.

### Temperature of laminate

During curling regulation, it is preferable to maintain the temperature of the laminate at 40°C to 100°C. The temperature of the laminate is measured as a surface temperature (film surface temperature) of the coating liquid film. The film surface temperature is measured with an infrared thermometer.

During curling regulation, the metal foil is stretched by maintaining the temperature of the laminate at 40°C to 100°C. After the completion of the drying, the metal foil contracts in a case where the laminate returns to room temperature, and thus the occurrence of breakage and wrinkles can be suppressed.

From the viewpoint of further suppressing the occurrence of breakage and wrinkles, the temperature of the laminate during the curling regulation is preferably 60°C to 80°C. Examples

Hereinafter, the present invention will be described in detail with reference to Examples. The materials, the amounts of materials to be used, the proportions, the details of each step, or the like shown in the examples below may be modified appropriately as long as the modifications do not depart from the spirit of the present invention. Therefore, the scope of the present invention is not limited to the specific examples described below.

All "parts" are based on mass.

### Preparation of metal foil

Aluminum foil: aluminum foil having a width of 1,000 mm, a thickness of 12 µm, and a length of 1,000 m (product name "1N30", manufactured by UACJ Foil Corporation)
Copper foil: Copper foil having a width of 1,000 mm, a thickness of 10 µm, and a length of 1,000 m (product name "NC-WS", manufactured by FURUKAWA ELECTRIC CO., LTD.)

### Preparation of coating liquid

### Preparation of water-based coating liquid A

The following components were mixed. Next, the mixture was diluted with pure water to prepare a water-based coating liquid A having a concentration of solid contents of 60% by mass.

### · Polyvinyl alcohol: 58 parts

(CKS-50: 99% by mole of saponification degree, 300 of polymerization degree, manufactured by Nippon Synthetic Chemical Industry Co., Ltd.)
· CELOGEN PR manufactured by DKS Co., Ltd.: 24 parts
· Surfactant (EMALEX 710 manufactured by Nihon Emulsion Co., Ltd.): 5 parts
· Aqueous dispersion of ART PEARL J-7P, prepared by the following method: 913 parts [0106] Aqueous dispersion of ART PEARL J-7P
3 parts of EMALEX 710 (nonionic surfactant, manufactured by Nihon Emulsion Co., Ltd.) and 3 parts of sodium carboxymethyl cellulose (manufactured by DKS Co., Ltd.) are added and dissolved in 74 parts of pure water. 20 parts of ART PEARL (registered trademark) J-7P (Nekonishi Chemical Co., Ltd., silica composite crosslinked acrylic resin fine particles) was added to the obtained aqueous solution, and the mixture was dispersed at 10,000 revolutions per minute (rpm) for 15 minutes with an Ace Homogenizer (Nihon Seiki Seisakusho Co., Ltd.) to obtain an aqueous dispersion of ART PEARL J-7P (particle concentration: 20% by mass).

The true specific gravity of the silica composite crosslinked acrylic resin fine particles in the obtained aqueous dispersion was 1.20, and the average particle diameter was 6.5 µm.

### Preparation of Solvent-Based Coating Liquid B

95 parts by mass of LiNi_{0.5}Co_{0.2}Mn_{0.3}O₂ (NCM523) and 2.5 parts by mass of acetylene black were mixed, and 2.5 parts by mass of polyvinylidene fluoride powder (product name "PVDF5130", manufactured by Solvay S.A.) was added little by little thereto and kneaded with a planetary mixer. 54 parts by mass of N-methylpyrrolidone was added thereto, thereby obtaining a solvent-based coating liquid B having a concentration of solid contents of 65% by mass.

### Preparation of Solvent-based Coating Liquid C

Graphite (C) as a negative electrode active material, styrene butadiene rubber (SBR) as a binder, carboxymethyl cellulose (CMC) and polyvinylpyrrolidone (PVP) as a viscosity adjuster, and graphite (GF) and carbon black (CB) as a conductive auxiliary agent were formulated at a mass ratio of C:SBR:CMC:PVP:GF:CB = 94:2:1:1:1:1, and the mixture was kneaded with ion-exchanged water to obtain a solvent-based coating liquid C having a concentration of solid contents of 60% by mass.

### Example 1

In the device configured as shown in Fig. 1, the water-based coating liquid A was applied onto one surface (in Table 1, "surface") of the metal foil to form a coating liquid film, and the formed coating liquid film was dried to obtain a coating film.

Specifically, the water-based coating liquid A was applied onto a continuously transported metal foil to form a coating liquid film.

Subsequently, while the laminate 12 of the obtained coating liquid film and the metal foil was transported through the drying unit 30B shown in Fig. 3, the coating liquid film was dried using a noncontact curling regulation unit to obtain a coating film.

In the pre-curling regulation region 32 in the drying unit 30B shown in Fig. 3, the temperature of the gas and the wind speed were adjusted such that the concentration of solid contents of the coating liquid film was 65% by mass in a case where the curling regulation was started. The concentration of solid contents of the coating liquid film was measured using an infrared spectroscopic interference film thickness meter SI-T80 manufactured by KEYENCE

### CORPORATION.

In the curling regulation region 34 in the drying unit 30B shown in Fig. 3, a gas was ejected to both surfaces of the laminate 12, and the laminate was continuously transported while being bent in the thickness direction by the wind pressure of the gas. The conditions for curling regulation in the curling regulation region 34 are as follows.
· Type of gas: air
· Temperature of gas: 120°C
· Wind pressure of gas ejected to surface on which coating liquid film is formed: 1.3 kPa
· Air volume of gas ejected to surface on which coating liquid film is formed: 5 m³/min
· Deformation amount of laminate: 300 mm of distance p in Fig. 3, 60 mm of height difference h in Fig. 3, 5 of distance p/height difference

The concentration of solid contents of the coating liquid film at the time of starting the curling regulation was 65% by mass, and the concentration of solid contents of the coating liquid film at the time of finishing the curling regulation was 99% by mass.

During curling regulation, the temperature of the laminate was 55°C. The temperature of the laminate was measured as a surface temperature (film surface temperature) of the coating liquid film. The film surface temperature was measured with an infrared thermometer.

### The transportation speed of the metal foil was 3.0 m/min.

Furthermore, the water-based coating liquid A was applied onto the other surface of the metal foil (in Table 1, "back surface") to form a coating liquid film, and the formed coating liquid film was dried to obtain a coating film.

The coating liquid film was dried using a noncontact curling regulation unit in the same manner as in the method of forming a coating film on one surface (in Table 1, "surface") of the metal foil, thereby obtaining a coating film.

In this manner, an electrode sheet in which a coating film was formed on both surfaces of the metal foil was obtained.

### Examples 2 to 14

A coating film was formed in the same manner as in Example 1, except that the type of the metal foil, the type of the coating liquid, and the film surface temperature were appropriately changed as shown in Table 1.

### Comparative Examples 1 to 4

The type of coating liquid and the film surface temperature were appropriately changed as shown in Table 1.

In addition, in a case of drying the coating liquid film, a two-dimensional slit nozzle was used instead of using the curling regulation unit.

In a case where the curling regulation unit was used in the step of drying the coating liquid film, "Y" was described in the column of the curling regulation unit in Table 1. In addition, in a case where the two-dimensional slit nozzle was used in the step of drying the coating liquid film, "N" was described in the column of the curling regulation unit.

In a case where the curling regulation unit is used, the film surface temperature described in Table 1 means the temperature of the laminate during the curling regulation.

In a case where the two-dimensional slit nozzle is used, the film surface temperature described in Table 1 means the temperature of the laminate during the ejection of the gas.

The conditions in a case where the two-dimensional slit nozzle is used are as follows.
· Type of gas: air
· Temperature of gas: 120°C
· Wind pressure of gas ejected to surface on which coating liquid film is formed: 1.3 kPa
· Air volume of gas ejected to surface on which coating liquid film is formed: 5 m³/min

The curvature radius of the obtained electrode sheet and the curvature radius of the curl after removing the coating film formed on one surface of the metal foil were measured. The measuring methods were as follows.

Among the formed coating films, the surface (that is, the front surface or the back surface) from which the coating film was removed is shown in Table 1.

### Curvature Radius

The electrode sheet was cut out to obtain a sample having a length of 100 mm and a width of 10 mm.

The sample was vertically installed in an environment of 25°C and a relative humidity of 50%, and the upper end was fixed.

The curl amount of the lower end of the sample was measured, and the curvature radius was calculated from the relationship with the width of the sample.

### Curvature radius of curl after removing coating film formed on one surface of metal foil

The electrode sheet was allowed to stand in an environment of 25°C and a relative humidity of 50% for 10 minutes or more.

The electrode sheet was cut out to obtain a sample.

The location and size of the portion cut out in the electrode sheet are as shown in Table 1.

In Table 1, "center" at a measurement point is a center of a portion obtained by cutting out a center portion of the electrode sheet.

In Table 1, the "end part" at the measurement point is a place where an end part of a portion cut out from a portion (metal foil portion) in which a coating film is not formed in the electrode sheet is located.

In Table 1, "100 mm" at a measurement point means that the long side length of the cut-out portion is 100 mm.

In Table 1, "30 mm" at a measurement point means that the long side length of the cut-out portion is 30 mm.

In the obtained sample, water at 25°C was applied to the coating film formed on the removal surface shown in Table 1 to wet the coating film. The amount of water was 20 g per area of 150 mm × 20 mm of the coating film. Water was applied to the coating film, and then the coating film was allowed to stand for 10 minutes. The sample was placed on a base, and the wet coating film was rubbed with a nonwoven fabric (product name "VENCOT", manufactured by Asahi Kasei Corporation) so as not to damage the surface of the metal foil, thereby removing the coating film from the metal foil. In a case of rubbing the coating film, the sample was not fixed to the base.

An operation of wetting the coating film with a solvent and an operation of rubbing the wet coating film with a nonwoven fabric were repeated three times until the coating film formed on one surface of the metal foil was completely removed.

The fact that the metal foil was not damaged by the operation of rubbing with the nonwoven fabric was determined based on the fact that the surface of the metal foil was visually observed and the gloss was maintained. In addition, the fact that the defect did not occur in the metal foil due to the operation of rubbing with the nonwoven fabric was determined based on the fact that the transmitted light was not present by applying light to the sample from the side of the coating film that was not rubbed.

After completely removing the coating film formed on one surface of the metal foil, the surface of the metal foil was wiped off. Then, the sample was dried by blowing air in an environment of 25°C and a relative humidity of 50%.

After the completion of the drying, the curvature radius of the curl after removing the coating film formed on one surface of the metal foil was measured by the same method as the above-described method of measuring the curvature radius.

Using the obtained electrode sheet, the evaluation of the workability of the battery and the breakage and wrinkles were performed.

### Workability of battery

The electrode sheet was set in a roll state in a continuous cutter (slitter). The electrode sheet was cut every 1 m as a length required for incorporating the electrode sheet into the battery. The workability in a case of setting the electrode sheet in a roll state in a continuous cutter and the deviation of the running position in the continuous cutter were evaluated. The deviation of the running position was visually confirmed.
A: The electrode sheet could be set in the continuous cutter without being pressed by hand, and the deviation of the running position was not confirmed.
B: The electrode sheet could be set to the continuous cutter by pressing the electrode sheet by hand, and the deviation of the running position was not confirmed.
C: The electrode sheet could be set in the continuous cutter by pressing the electrode sheet by hand, but the deviation of the running position was confirmed.

### Breakage and wrinkles

In general, in a continuous process of a roll-to-roll method, a coating film is not formed at both terminals of the electrode sheet in the length direction. In the electrode sheet, a boundary vicinity between a portion where the coating film is not formed and a portion where the coating film is formed is likely to be deformed with the concentration of the internal stress of the coating film. Therefore, the breakage and wrinkles in the vicinity of the boundary were evaluated.

In the electrode sheet, a sample including a portion (length: 1 m) in which a coating film was not formed at both terminals in the length direction and a portion (length: 1 m) in which a coating film was formed was cut out, and the presence or absence of breakage and wrinkles was visually observed.
A: There is no breakage and wrinkles.
B: The wrinkle is present, but not completely broken (not plastically deformed).
C: The wrinkle is present and completely broken (plastically deformed).

The evaluation results are shown in Table 1.

In Table 1, the curvature radius A means a curvature radius of a curl of the electrode sheet. The curvature radius B means a curvature radius of a curl after removing the coating film formed on one surface of the metal foil.

**Table 1**

| | Electrode sheet | | | Manufacturing method for electrode sheet | | | | | Evaluation | | | | | |
|---|---|---|---|---|---|---|---|---|---|---|---|---|---|---|
| | Metal foil | | Coating film | Coating liquid | Surface | | Back surface | | | Measurement point | Curvature radius A [mm] | Curvature radius B [mm] | Workability of battery | breakage and wrinkles |
| | Type | Thickness (µm) | Thickness (µm) | Type | Curling regulation unit | Film surface temperature (°C) | Curling regulation unit | Film surface temperature (°C) | Removal surface | | | | | |
| Example 1 | Aluminum foil | 12 | 80 | A | Y | 55 | Y | 55 | Back | Center 100 mm | 10,000 | 833 | A | A |
| Example 2 | Aluminum foil | 12 | 80 | B | Y | 55 | Y | 55 | Back | Center 100 mm | 10,000 | 1,000 | A | A |
| Example 3 | Aluminum foil | 12 | 80 | C | Y | 55 | Y | 55 | Back | Center 100 mm | 10,000 | 833 | A | A |
| Example 4 | Aluminum foil | 15 | 80 | A | Y | 55 | Y | 55 | Back | Center 100 mm | 10,000 | 1,000 | B | A |
| Example 5 | Copper foil | 15 | 80 | A | Y | 55 | Y | 55 | Back | Center 100 mm | 10,000 | 1,428 | B | A |
| Example 6 | Aluminum foil | 10 | 80 | A | Y | 55 | Y | 55 | Back | Center 100 mm | 5,000 | 666 | A | A |
| Example 7 | Aluminum foil | 12 | 80 | A | Y | 55 | Y | 55 | Front | Center 100 mm | 10,000 | 909 | A | A |
| Example 8 | Aluminum foil | 12 | 80 | A | Y | 55 | Y | 55 | Back | End part 100 mm | 10,000 | 833 | A | A |
| Example 9 | Aluminum foil | 12 | 80 | A | Y | 55 | Y | 55 | Back | Center 30 mm | 10,000 | 450 | A | A |
| Example 10 | Aluminum foil | 12 | 30 | A | Y | 55 | Y | 55 | Back | Center 100 mm | 5,000 | 1,000 | A | A |
| Example 11 | Aluminum foil | 12 | 200 | A | Y | 55 | Y | 55 | Back | Center 100 mm | 10,000 | 909 | B | A |
| Example 12 | Aluminum foil | 12 | 80 | A | Y | 45 | Y | 45 | Back | Center 100 mm | 10,000 | 625 | B | A |
| Example 13 | Aluminum foil | 12 | 80 | A | Y | 60 | Y | 60 | Back | Center 100 mm | 5,000 | 400 | A | B |
| Example 14 | Aluminum foil | 12 | 80 | A | Y | 40 | Y | 40 | Back | Center 100 mm | 5,000 | 344 | A | B |
| Comparative Example 1 | Aluminum foil | 12 | 80 | A | N | 55 | Y | 55 | Back | Center 100 mm | 1,666 | 333 | C | C |
| Comparative Example 2 | Aluminum foil | 12 | 80 | A | N | 55 | N | 55 | Back | Center 100 mm | 5,000 | 333 | A | C |
| Comparative Example 3 | Aluminum foil | 12 | 80 | B | N | 55 | N | 55 | Back | Center 100 mm | 5,000 | 333 | A | C |
| Comparative Example 4 | Aluminum foil | 12 | 80 | A | N | 55 | Y | 40 | Back | Center 100 mm | 2,000 | 333 | B | C |

As shown in Table 1, in Examples 1 to 14, it was found that, since the electrode sheet includes a metal foil having a thickness of 15 µm or less and a coating film formed on both surfaces of the metal foil, the curvature radius of the curl of the electrode sheet is 2,000 mm or more, and the curvature radius of the curl after removing the coating film formed on one surface of the metal foil from the electrode sheet is 350 mm or more, the occurrence of breakage and wrinkles is suppressed. That is, it was found that the residual stress in the electrode sheet was low.

On the other hand, in Comparative Examples 1 to 4, after removing the coating film formed on one surface of the metal foil from the electrode sheet, the curvature radius of the curl was less than 350 mm, and breakage and wrinkles occurred.

In Example 4, the metal foil was an aluminum foil, and the weight was reduced as compared with Example 5. In a case of being used in a secondary battery, the performance per unit mass is one of evaluation indexes, and thus it is desirable to use a lightweight aluminum foil.

In Example 1, it was found that the thickness of the metal foil was 12 µm or less, and the workability of the battery was excellent as compared with Example 4.

### Explanation of References

10: metal foil
12: laminate of coating liquid film and metal foil
20: coating unit
30, 30A, 30B: drying unit
32: pre-curling regulation region
34: curling regulation region
36: transport roll
38, 38a, 38b: ejection unit
h: height difference between peak and valley (height difference of undulation)
p: distance between peak and adjacent peak (interval of undulation)

## Claims

1. An electrode sheet comprising:
a metal foil having a thickness of 15 µm or less; and
coating films formed on both surfaces of the metal foil,
wherein a curvature radius of a curl of the electrode sheet is 2,000 mm or more, and
a curvature radius of the curl after the coating film formed on one surface of the metal foil is removed from the electrode sheet is 350 mm or more.

2. The electrode sheet according to claim 1,
wherein a thickness of the coating film is 30 µm to 200 µm.

3. The electrode sheet according to either claim 1 or 2,
wherein the metal foil is an aluminum foil.

4. The electrode sheet according to any one of claims 1 to 3,
wherein the thickness of the metal foil is 12 µm or less.

5. The electrode sheet according to any one of claims 1 to 4,
wherein the coating film contains a carbon nanotube.

6. The electrode sheet according to any one of claims 1 to 5,
wherein the electrode sheet is used for a negative electrode of a secondary battery.

7. A manufacturing method for an electrode sheet, comprising:
a step of forming coating films on both surfaces of a metal foil having a thickness of 15 µm or less to manufacture the electrode sheet,
wherein a curvature radius of a curl of the electrode sheet is 2,000 mm or more, and
a curvature radius of the curl after the coating film formed on one surface of the metal foil is removed from the electrode sheet is 350 mm or more.
